# EUROPEAN PATENT SPECIFICATION

(11) **EP 3 365 993 B1**
(45) Date of publication and mention of the grant of the patent: **31.07.2019**
(21) Application number: 15788360.4
(22) Date of filing: 23.10.2015
(51) Int. Cl.: H04B 10/2575, H04B 10/61

(54) **IMPROVED PHOTONIC-ASSISTED RF SPECTRUM SCANNER FOR ULTRA-WIDE BAND RECEIVERS**
VERBESSERTER PHOTONENUNTERSTÜTZTER HF-SPEKTRUMSABTASTER FÜR ULTRABREITBANDIGE EMPFÄNGER
ANALYSEUR DE SPECTRE RF ASSISTÉ PAR PHOTONS POUR RÉCEPTEURS À BANDE ULTRA-LARGE

(43) Date of publication of application: 29.08.2018
(73) Proprietor: Elettronica S.p.A., 00131 Roma (IT)
(72) Inventor: ALBERTONI, Alessandro, 00131 Roma (IT); TAFUTO, Antonio, 00131 Roma (IT); BARTOCCI, Marco, 00131 Roma (IT); GEMMA, Maurizio, 00131 Roma (IT); MAZZOLI, Raffaella, 00131 Roma (IT); ONORI, Daniel, 56124 Pisa (IT); LAGHEZZA, Francesco, 56124 Pisa (IT); GHELFI, Paolo, 56124 Pisa (IT); PINNA, Sergio, 56124 Pisa (IT); SCOTTI, Filippo, 56124 Pisa (IT); SERAFINO, Giovanni, 56124 Pisa (IT); BOGONI, Antonella, 56124 Pisa (IT)
(74) Representative: Sordini, Lorenzo
(86) International application number: PCT/EP2015/074679
(87) International publication number: WO 2017/067617

(56) References cited:
- WO-A2-2015/132772
- US-A1- 2013 177 319
- PAOLO GHELFI ET AL: "Novel Architecture for a Photonics-Assisted Radar Transceiver Based on a Single Mode-Locking Laser", IEEE PHOTONICS TECHNOLOGY LETTERS, IEEE SERVICE CENTER, PISCATAWAY, NJ, US, vol. 23, no. 10, 1 May 2011 (2011-05-01), pages 639-641, XP011354890, ISSN: 1041-1135, DOI: 10.1109/LPT.2011.2120605

## Description

### TECHNICAL FIELD OF THE INVENTION

The present invention relates to a photonic-assisted Radio Frequency (RF) spectrum scanner and a receiver including the same for use in Ultra-Wide Band (UWB) reception. In particular, the present invention finds advantageous, but non-exclusive, application in Electronic Warfare (EW) systems, such as Electronic Support Measure (ESM) systems and Electronic Counter-Measure (ECM) systems.

### BACKGROUND ART

As is known, for ESM applications UWB receivers are employed that can be designed to cover microwave bands from 0.5 GHz up to 20 GHz, or even 40 GHz.

Nowadays, two types of receivers are mainly used for ESM applications, namely Wide-Open (WO) and superheterodyne receivers.

In particular, a WO receiver is designed so as to operate, at each time instant, in an instantaneous frequency band corresponding to its own overall operating frequency band, while a superheterodyne receiver is designed so as to operate, at each time instant, in an instantaneous frequency band that is narrower than its own overall operating frequency band.

In detail, a WO receiver typically includes:
- four or more goniometric channels, each of which is
   - coupled to a respective directional antenna to receive incoming RF signals, and
   - configured to apply a pre-processing to the incoming RF signals so as to obtain corresponding video signals; and
- a processing unit, that is
   - coupled to the goniometric channels to receive the video signals, and
   - configured to process the video signals so as to detect any threat and determine, for each detected threat, a corresponding Direction Of Arrival (DOA).

More in detail, each of the goniometric channels typically includes:
- a respective RF chain comprising
   - a respective RF signal amplifier for amplifying the incoming RF signals, and
   - respective filtering means for filtering the amplified RF signals;
- a respective square-law diode detector, which is
   - coupled to the respective RF chain to receive the filtered RF signals, and
   - configured to output video signals proportional to the square of the filtered RF signals, i.e., proportional to power levels of the filtered RF signals; and
- a respective video signal amplifier for amplifying the video signals outputted by the respective square-law diode detector, wherein the amplified video signals are then supplied to the processing unit.

As is known, square-law diode detectors perform an incoherent detection thereby losing phase information of the signals.

Moreover, WO receivers are particularly sensitive to the presence, in the surrounding electromagnetic environment, of Continuous Waves (CWs) (i.e., electromagnetic waves of constant amplitude and frequency) and Interrupted, Continuous Waves (ICWs) (i.e., CWs modulated with an on-off keyed carrier). In fact, WO receivers, when are illuminated by one or more CW/ICW signal(s), could be totally blinded by the latter thereby being unable to detect other pulsed signals of interest, i.e., pulsed-threat-related signals.

In particular, WO receivers typically protect their detection capability by looking beyond CW/ICW level, namely by increasing detection thresholds up to CW/ICW power level, thereby reducing their operative dynamic range so as to detect only pulsed-threat-related signals having a power level higher than the CW/ICW power level.

Instead, superheterodyne receivers are typically designed to:
- shift incoming RF signals to lower frequencies, in particular to predetermined Intermediate Frequencies (IFs), by means of mixers operatively coupled to suitable local oscillators;
- convert the analog IF signals into corresponding digital IF signals by means of Analog-to-Digital (A/D) conversion means with suitable sampling performances; and
- process the digital IF signals by means of digital processing means, conveniently programmable devices such as Digital Signal Processors (DSPs) and/or Field-Programmable Gate Arrays (FPGAs).

In particular, super-heterodyne receivers perform a coherent detection by exploiting, as previously explained, mixers and local oscillators, that, as is known, introduce noise and nonlinearities thereby degrading the downconverted signals.

The Applicant felt the need to tackle the above drawbacks of the WO and superheterodyne receivers and, thence, carried out an in-depth study in order to develop a UWB receiver for ESM applications, that was capable of overcoming, at least in part, said drawbacks. While carrying out said in-depth study, the Applicant made the following observations.

First of all, the Applicant noticed that, for ESM applications, a Software-Defined Radio (SDR), wideband RF receiver should be used, which avoids problems due to noisy and nonlinear RF down-conversions, and performs digital processing directly at RF in order to enhance system's flexibility. However, bandwidth limitations of current digital devices impose fixed channelized implementation to analyze the entire RF spectrum. For this reason, and according to the relentless increasing of the operating frequencies, a significant growth in system's cost, size, weight and power requirements is inevitable.

Moreover, in order to match the requirements of a SDR receiver, a wideband Analog-to-Digital Converter (ADC) with high resolution and high dynamic range should be used, which enables RF signals to be instantly analyzed with arbitrary frequency and bandwidth by means of digital signal processing techniques. Under-sampling techniques can achieve a high precision with a reduced instantaneous bandwidth, though with intrinsic limitations due to ambiguities produced by unwanted aliased signals.

In order to avoid ambiguities related to under-sampling, and to down-convert only frequencies of interest, a tunable microwave filter should be employed. Even though the speed of modern semiconductor devices already supports RF integrated circuits with bandwidths exceeding many tens of gigahertz, a competitive filter technology to facilitate radio operations with a similar bandwidth and tunability does not exist yet.

On the other hand, the Applicant noticed also that current photonic technologies offer extremely large electro-optical bandwidths, wide and fast tunability, very low noise, high linearity, and intrinsic electromagnetic immunity, allowing to treat microwave signals with superior precision, and enabling implementation of SDR paradigm while reducing size, weight, power and costs. In particular, current microwave photonic filters have very high quality factors (up to 200.000) and extremely large tunability (in excess of 100 GHz), which make the use of these devices attractive for microwave operations up to 100 GHz.

Proceeding from the aforesaid observations, the Applicant succeeded in conceiving and realizing a photonic-assisted RF spectrum scanner for UWB receivers. Said photonic-assisted RF spectrum scanner is disclosed in WO 2015/132772 A2 and includes:
- a first optical waveguide arm comprising, in cascade, an input end, a first electro-optical modulator, a tunable optical filter and an output end, wherein said first electro-optical modulator is designed to be connected to an antenna to receive therefrom an incoming radio frequency signal;
- a second optical waveguide arm comprising, in cascade, an input end, a second electro-optical modulator, an optical delay line and an output end;
- a mode-locked laser connected, through an optical splitter, to the input ends of the first and second optical waveguide arms to supply the latter with optical pulses;
- an optical hybrid coupler connected to the output ends of the first and second optical waveguide arms and operable to combine optical signals received from the latter to produce corresponding output optical signals; and
- photodetection means connected to the optical hybrid coupler to receive the output optical signals and configured to convert the latter into corresponding baseband electrical analog signals.

Moreover, WO 2015/132772 A2 teaches also that:
- the first electro-optical modulator is configured to modulate the optical pulses supplied by the mode-locked laser by means of the incoming radio frequency signal so as to carry out an optical sampling of the latter, whereby a modulated optical signal is produced, which is indicative of said optical sampling;
- the tunable optical filter is operable to filter the modulated optical signal so as to select a portion of spectrum of the latter;

- the second electro-optical modulator is operable to decimate the optical pulses supplied by the mode-locked laser; and
- the optical delay line is operable to delay the decimated optical pulses.

For a better understanding of the photonic-assisted RF spectrum scanner according to WO 2015/132772 A2, Figure 1 shows a block diagram schematically representing an architecture of a UWB receiver (denoted as a whole by 100) according to a preferred embodiment of the invention disclosed in WO 2015/132772 A2.

In particular, the UWB receiver 100 includes a photonic-assisted RF spectrum scanner comprising a Mode-Locked Laser (MLL) 101 connected to a first optical waveguide arm 110 and a second optical waveguide arm 120 through an optical splitter 102.

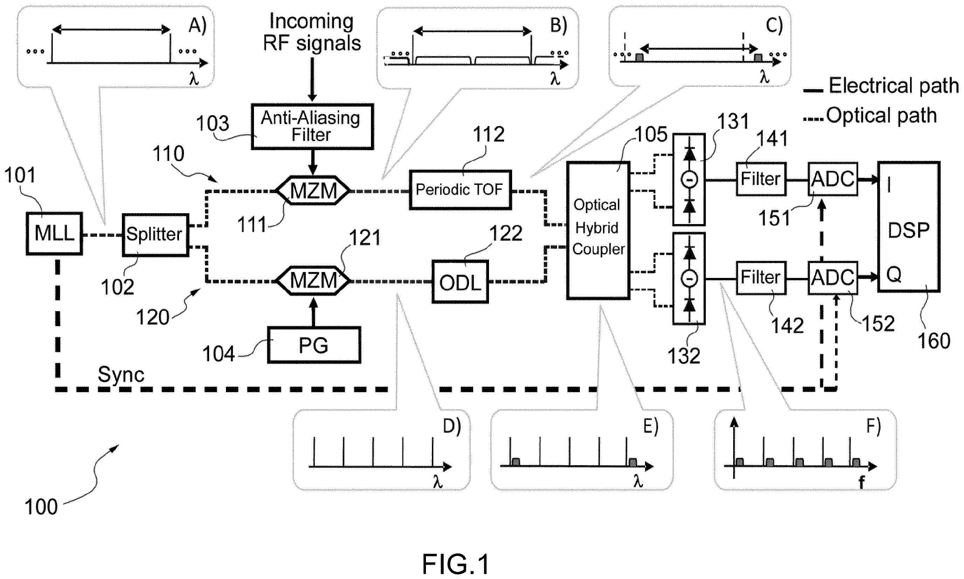

Moreover, the first optical waveguide arm 110 includes:
- a first Mach-Zehnder Modulator (MZM) 111 designed to receive
   - optical pulses generated by the MLL 101, and
   - incoming RF signals from an antenna (not shown in Figure 1), conveniently through an anti-aliasing filter 103; and
- a periodic Tunable Optical Filter (TOF) 112 connected to the first MZM 111.

Instead, the second optical waveguide arm 120 includes:
- a second MZM 121 designed to receive
   - the optical pulses generated by the MLL 101, and
   - signals generated by a Pattern Generator (PG) 104; and
- an Optical Delay Line (ODL) 122 connected to the second MZM 121.

Moreover, the photonic-assisted RF spectrum scanner further comprises:
- an optical hybrid coupler 105 connected to the first and second optical waveguide arms 110 and 120 to receive optical signals therefrom (in particular from the TOF 112 and the ODL 122); and
- photodetection means, preferably two balanced photodetectors 131 and 132, connected to the optical hybrid coupler 105.

Additionally, as shown in Figure 1, the UWB receiver 100 further includes:
- two filters 141 and 142, each connected to a respective one of the two balanced photodetectors 131 and 132;
- two ADCs 151 and 152, each connected to a respective one of the two filters 141 and 142; and
- a Digital Signal Processor (DSP) 160 connected to the ADCs 151 and 152.

During operation of the UWB receiver 100, the MLL 101 generates optical pulses with a predefined repetition rate (inset A in Figure 1 schematically illustrating an example of optical spectrum downstream of the MLL 101), and said optical pulses are supplied, as input, to both the first and second optical waveguide arms 110 and 120 through the optical splitter 102.

As for the first optical waveguide arm 110, in the first MZM 111 an incoming RF signal received from the antenna is optically sampled by the optical pulses received from the MLL 101. In particular, in the first MZM 111 the incoming RF signal modulates the optical pulses received from the MLL 101 so that the resulting modulated optical signal has an optical spectrum that is a periodic repetition of the spectrum of the modulating incoming RF signal with a repetition rate equal to the repetition rate of the MLL 101 (inset B in Figure 1 schematically illustrating an example of optical spectrum downstream of the first MZM 111). Conveniently, if double-sideband modulation (DSB) is performed, the repetition rate of the MLL 101 is larger than twice the maximum acceptable RF frequency to avoid aliasing.

The modulated optical signal (i.e., the optically sampled RF signal) is then filtered by the periodic TOF 112 so as to select a spectrum portion of interest (which has, conveniently, a bandwidth such that to allow the ADCs 151 and 152 to perform the A/D conversion). Conveniently, the periodic TOF 112 has a Free Spectral Range (FSR) related to the repetition rate of the MLL 101 (inset C in Figure 1 schematically illustrating an example of optical spectrum downstream of the periodic TOF 112). More conveniently, the periodic TOF 112 has an FSR equal to the repetition rate of the MLL 101. Preferably, the periodic TOF 112 is a Fabry-Perot filter.

As for the second optical waveguide arm 120, the optical pulses received from the MLL 101 are decimated to a lower rate by the second MZM 121 on the basis of a predefined decimation-related signal provided by the PG 104 (inset D in Figure 1 schematically illustrating an example of optical spectrum downstream of the second MZM 121). Conveniently, the PG 104 is operable to provide different decimation-related signals so as to cause the decimation performed by the second MZM 121 to be reconfigurable.

The ODL 122 delays the decimated optical pulses so as to synchronize the optical signals that reach the optical hybrid coupler 105 from the first and second optical waveguide arms 110 and 120 (i.e., the filtered modulated optical signal from the TOF 112 and said delayed decimated optical pulses). Conveniently, the ODL 122 is operable to match relative phase of the two optical waveguide arms 110 and 120. Preferably, the ODL 122 is a tunable optical delay line.

The optical hybrid coupler 105 combines the filtered modulated optical signal received from the first optical waveguide arm 110 and the delayed decimated optical pulses received from the second optical waveguide arm 120 into a corresponding combined optical signal (inset E in Figure 1 schematically illustrating an example of optical spectrum resulting from combination performed by the optical hybrid coupler 105), and outputs optical in-phase (I) and quadrature (Q) components of said combined optical signal.

The balanced photodetectors 131 and 132 receive the optical components I and Q from the optical hybrid coupler 105, perform a coherent balanced detection in order to reduce even-order inter-modulation distortion, common-mode noise terms and direct detection contributions, and output corresponding baseband electrical analog components I and Q, which are filtered by the filters 141 and 142, and then converted by the ADCs 151 and 152 into corresponding baseband digital components I and Q.

Lastly, said baseband digital components I and Q are supplied to the DSP 160 to be processed by the latter.

### OBJECT AND SUMMARY OF THE INVENTION

After having devised the photonic-assisted RF spectrum scanner disclosed in WO 2015/132772 A2, the Applicant has carried on researching in order to try to improve said photonic-assisted RF spectrum scanner, thereby succeeding in conceiving a new, innovative photonic-assisted RF spectrum scanner with improved features.

Thence, an object of the present invention is that of providing an improved photonic-assisted RF spectrum scanner for UWB receivers.

This and other objects are achieved by the present invention in that it relates to a photonic-assisted RF spectrum scanning device and a receiver including the same, as defined in the appended claims.

In particular, the photonic-assisted RF spectrum scanning device according to the present invention includes:
- a first optical waveguide arm;
- a second optical waveguide arm;
- a tunable single-wavelength laser, that is
   - connected to input ends of the first and second optical waveguide arms, and
   - operable to supply said first and second optical waveguide arms with a single-wavelength optical signal having a single, tunable wavelength;
- an optical hybrid coupler, that is
   - connected to output ends of the first and second optical waveguide arms, and
   - designed to combine optical signals received from said first and second optical waveguide arms so as to produce corresponding optical in-phase and quadrature components; and
- photodetection means, that are
   - connected to the optical hybrid coupler to receive the optical in-phase and quadrature components, and
   - configured to convert said optical in-phase and quadrature components into corresponding baseband electrical analog in-phase and quadrature components;
wherein the first optical waveguide arm comprises an electro-optical modulator, that is designed to:
- receive an incoming radio frequency signal; and
- modulate the single-wavelength optical signal by means of the incoming radio frequency signal, thereby producing a modulated optical signal;
and wherein the second optical waveguide arm comprises:
- a coherent optical comb generator, that is designed to generate an optical wavelength comb on the basis of the single-wavelength optical signal; and
- a fixed optical bandpass filter, that is designed to filter the optical wavelength comb so as to select a portion thereof, thereby producing a filtered optical signal.

### BRIEF DESCRIPTION OF THE DRAWINGS

For a better understanding of the present invention, preferred embodiments, which are intended purely by way of example and are not to be construed as limiting, will now be described with reference to the attached drawings (not to scale), where:
- Figure 1 schematically illustrates a UWB receiver according to the background art; and
- Figure 2 schematically illustrates a UWB receiver according to a preferred embodiment of the present invention.

### DETAILED DESCRIPTION OF PREFERRED EMBODIMENTS OF THE INVENTION

The following discussion is presented to enable a person skilled in the art to make and use the invention. Various modifications to the embodiments will be readily apparent to those skilled in the art, without departing from the scope of the present invention as claimed. Thus, the present invention is not intended to be limited to the embodiments shown and described, but is to be accorded the widest scope consistent with the principles and features disclosed herein and defined in the appended claims.

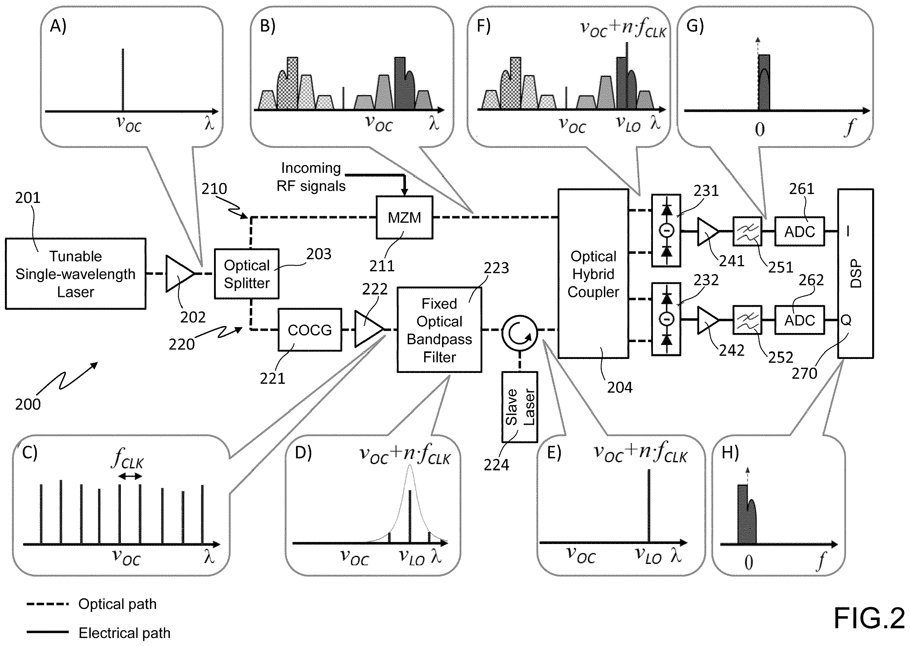

For a better understanding of the present invention, Figure 2 shows a block diagram schematically representing an architecture of a UWB receiver (denoted as a whole by 200) according to a preferred embodiment of the present invention.

In particular, the UWB receiver 200 includes a photonic-assisted RF spectrum scanner comprising a tunable single-wavelength laser 201, that is:
- operable to emit light at a single, tunable wavelength (i.e., a single wavelength that is tunable/selectable within a predefined wavelength range or among several different predefined wavelengths);
- designed to operate as a master laser; and
- connected to a first optical waveguide arm 210 and a second optical waveguide arm 220, conveniently through a first optical power amplifier 202 and an optical splitter 203.

Moreover, the first optical waveguide arm 210 includes an electro-optical modulator, preferably a Mach-Zehnder Modulator (MZM), 211 designed to receive:
- a single-wavelength optical signal generated by the tunable single-wavelength laser 201 (conveniently amplified by the first optical power amplifier 202 and received through the optical splitter 203); and
- an incoming RF signal from an antenna, conveniently through an anti-aliasing filter (said antenna and said anti-aliasing filter are not shown in Figure 2 for the sake of illustration simplicity).

Instead, the second optical waveguide arm 220 includes:
- a Coherent Optical Comb Generator (COCG) 221, that is designed to
   - receive the single-wavelength optical signal generated by the tunable single-wavelength laser 201 (conveniently amplified by the first optical power amplifier 202 and received through the optical splitter 203), and
   - generate a corresponding optical wavelength comb, thereby producing a comb of phase-locked photonic local oscillations; and
- a fixed optical bandpass filter 223, that is
   - connected to the COCG 221, conveniently through a second optical power amplifier 222, and
   - configured to filter the optical wavelength comb generated by the COCG 221 (conveniently amplified by the second optical power amplifier 222), so as to select a portion of said optical wavelength comb (conveniently so as to select only one wavelength of said optical wavelength comb), thereby producing a filtered optical signal carrying the phase-locked photonic local oscillation selected to be used for mixing process.

Conveniently, the COCG 221 can be realized as a series of amplitude and phase electro-optical modulators driven by an oscillator at a predefined frequency *f_{CLK}* (for example 1 GHz) .

Preferably, the second optical waveguide arm 220 includes also a slave laser 224, that is:
- injected with the filtered optical signal from the fixed optical bandpass filter 223; and
- used to increase and stabilize optical power to be used for the mixing process, while maintaining phase locking with the master laser 201.

Conveniently, the slave laser 224 can be embodied as a distributed feedback (DFB) laser.

Moreover, the photonic-assisted RF spectrum scanner further comprises:
- an optical hybrid coupler 204, preferably a 90-degree optical hybrid coupler, connected to the first and second optical waveguide arms 210 and 220 to receive the optical signals from the MZM 211 and the slave laser 224, respectively; and
- photodetection means, preferably two balanced photodetectors 231 and 232, connected to the optical hybrid coupler 204.

Additionally, the UWB receiver 200 further includes:
- two ADCs 261 and 262, each connected to a respective one of the two balanced photodetectors 231 and 232, conveniently through a respective amplifier 241/242 and a respective filter 251/252; and
- a DSP 270 connected to the ADCs 261 and 262.

As for operation of the first optical waveguide arm 210, in the MZM 211 an incoming RF signal received from the antenna (conveniently through the anti-aliasing filter) modulates a single-wavelength optical signal generated by the tunable single-wavelength laser 201 (conveniently amplified by the first optical power amplifier 202 and received through the optical splitter 203), thereby producing a corresponding modulated optical signal.

Instead, as for operation of the second optical waveguide arm 220, the tunable single-wavelength laser 201 is used as master laser to feed the COCG 221, that, hence, produces a comb of phase-locked photonic local oscillations, one of which is selected by the fixed optical bandpass filter 223 to be used for the mixing process performed by the balanced photodetectors 231 and 232. Moreover, preferably, the slave laser 224 is used, which is injected with the selected phase-locked photonic local oscillation to produce a corresponding output optical signal to be used for the mixing process, wherein said output optical signal is characterized by higher power and lower noise than the filtered optical signal received from the fixed optical bandpass filter 223.

Therefore, during operation of the UWB receiver 200, RF spectrum scanning is carried out by tuning the tunable single-wavelength laser 201 to several different predefined wavelengths so that, for each single wavelength used, a respective phase-locked photonic local oscillation is selected by the fixed optical bandpass filter 223 and, thence, used for the mixing process performed by the balanced photodetectors 231 and 232.

In other words, the tunable single-wavelength laser 201 and the second optical waveguide arm 220 are designed to operate as a tunable photonic local oscillator that is operable to provide several different phase-locked photonic local oscillations, so that the mixing process performed by the balanced photodetectors 231 and 232 down-converts to baseband different portions of the RF spectrum of the incoming RF signal. With this mechanism, the filtering process can be realized in the electrical domain at baseband, and the use of tunable optical filters is avoided.

More in detail, during operation of the UWB receiver 200, the optical hybrid coupler 204 combines the optical signals received from the first and second optical waveguide arms 210 and 220 (in particular, respectively, the modulated optical signal from the MZM 211, and the output optical signal from the slave laser 224 carrying the phase-locked photonic local oscillation selected to be used for the mixing process) into a corresponding combined optical signal, and outputs optical in-phase (I) and quadrature (Q) components of said combined optical signal.

Then, the balanced photodetectors 231 and 232 receive the optical components I and Q from the optical hybrid coupler 204, perform a coherent balanced detection in order to reduce even-order inter-modulation distortion, common-mode noise terms and direct detection contributions, and, thence, output corresponding baseband electrical analog components I and Q, which are:
- amplified by the amplifiers 241 and 242;
- filtered by the filters 251 and 252; and then
- converted by the ADCs 261 and 262 into corresponding baseband digital components I and Q.

Lastly, said baseband digital components I and Q are supplied to the DSP 270 to be processed by the latter.

For a better understanding of the operation of the UWB receiver 200, Figure 2 shows also:
- in an inset A, an example of optical spectrum of a single-wavelength optical signal generated by the tunable single-wavelength laser 201;
- in an inset B, an example of optical spectrum of a modulated optical signal produced by the MZM 211;
- in an inset C, an example of optical wavelength comb generated by the COCG 221;
- in an inset D, an example of optical spectrum of a filtered optical signal produced by the fixed optical bandpass filter 223;
- in an inset E, an example of optical spectrum downstream of the slave laser 224;
- in an inset F, an example of optical spectrum resulting from the combination performed by the optical hybrid coupler 204;
- in an inset G, an example of frequency spectrum of a baseband electrical analog component I downstream of the filter 251; and,
- in an inset H, an example of frequency spectrum of a baseband digital signal processed by the DSP 270.

From the foregoing it is absolutely clear that the architectures of the photonic-assisted RF spectrum scanner according to the present invention and of that one disclosed in WO 2015/132772 A2 are completely different.

In fact, the photonic-assisted RF spectrum scanner according to WO 2015/132772 A2 exploits:
- a mode-locked laser (i.e., the MLL 101 in Figure 1) to optically sample an incoming RF signal by means of an electro-optical modulator (i.e., the first MZM 111 in Figure 1), thereby producing an optical spectrum that is a periodic repetition of the spectrum of the modulating incoming RF signal;
- a tunable optical filter (i.e., the periodic TOF 112 in Figure 1) to dynamically select a spectrum portion of interest; and
- an optical waveguide arm (i.e., the second optical waveguide arm 120 in Figure 1) to decimate and delay the optical pulses from the Mode-Locked Laser and, hence, to provide the local oscillation for baseband down-conversion.

On the contrary, the photonic-assisted RF spectrum scanner according to the present invention exploits, as previously explained, the tunable single-wavelength laser 201, the COCG 221 and the fixed optical bandpass filter 223 to provide several different phase-locked photonic local oscillations so as to down-convert to baseband different portions of the RF spectrum of an incoming RF signal.

In this connection, it is worth noting that a tunable single-wavelength laser and a fixed optical bandpass filter are much cheaper and easier to be manufactured than, respectively, a mode-locked laser and a tunable optical filter. Moreover, a fixed optical bandpass filter is typically more efficient (since it is characterized by higher rejection capabilities) than a tunable optical filter.

Thence, the photonic-assisted RF spectrum scanner according to the present invention is, on the whole, much cheaper and easier to be manufactured and more efficient than the photonic-assisted RF spectrum scanner disclosed in WO 2015/132772 A2.

The advantages of the present invention are clear from the foregoing.

In particular, it is worth highlighting the fact that the architecture according to the present invention combines the functions of RF filtering, down-conversion, and analog-to-digital conversion, in a single device. This architecture enables direct detection of signals up to hundreds of GHz, with high precision over an instantaneous bandwidth of few GHz, implementing a fast scan of the spectrum, with reduced size, weight, power and costs.

Moreover, the present invention allows to improve performances of a classical microwave ultra-wideband down-converter in terms of wider RF bandwidth, lower down-conversion noise, and lower size, weight and power.

Additionally, the UWB receiver according to the present invention can be advantageously integrated on a single chip.

The above advantages of the present invention can be of benefit to several applications, such as:
- low-weight UWB radar systems with high electromagnetic immunity for Unmanned Aerial Vehicles (UAVs) and avionic systems;
- airport and port integrated traffic control (both land-side and air-side);
- UWB signal intelligence (SIGINT) and Electronic Warfare (EW);
- frequency hopping and phase coded radar systems (such as fully adaptive radar systems for frequency and waveform diversity and Signal Intelligent Detection);
- dual-use UWB systems (such as UWB detection and imaging systems for radar with integrated communication functions for huge data exchange and streaming);
- distributed multifunctional radar systems (Radio-over-Fiber (RoF) microwave signal distribution in Multi-In-Multi-Out (MIMO) applications or for different site locations); and
- reconfigurable beam forming (adaptive true time delay beam forming for radar/telecom adaptive systems).

Finally, it is clear that numerous modifications and variants can be made to the present invention, all falling within the scope of the invention, as defined in the appended claims.

## Claims

1. Photonic-assisted radio frequency spectrum scanning device including:
• a first optical waveguide arm (210);
• a second optical waveguide arm (220);
• a tunable single-wavelength laser (201), that is
- connected to input ends of the first and second optical waveguide arms (210,220), and
- operable to supply said first and second optical waveguide arms (210,220) with a single-wavelength optical signal having a single, tunable wavelength;
• an optical hybrid coupler (204), that is
- connected to output ends of the first and second optical waveguide arms (210,220), and
- designed to combine optical signals received from said first and second optical waveguide arms (210,220) so as to produce corresponding optical in-phase and quadrature components; and
• photodetection means (231,232), that are
- connected to the optical hybrid coupler (204) to receive the optical in-phase and quadrature components, and
- configured to convert said optical in-phase and quadrature components into corresponding baseband electrical analog in-phase and quadrature components;
wherein the first optical waveguide arm (210) comprises an electro-optical modulator (211), that is designed to:
• receive an incoming radio frequency signal; and
• modulate the single-wavelength optical signal by means of the incoming radio frequency signal, thereby producing a modulated optical signal;
and wherein the second optical waveguide arm (220) comprises:
• a coherent optical comb generator (221), that is designed to generate an optical wavelength comb on the basis of the single-wavelength optical signal; and
• a fixed optical bandpass filter (223), that is designed to filter the optical wavelength comb so as to select a portion thereof, thereby producing a filtered optical signal.

2. The device of claim 1, wherein:
• the tunable single-wavelength laser (201) is designed to operate as a master laser;
• the second optical waveguide arm (220) further comprises a slave laser (224), that is injected with the filtered optical signal to produce a corresponding output optical signal; and
• the optical hybrid coupler (204) is connected to the output ends of the first and second optical waveguide arms (210,220) to receive, respectively, the modulated optical signal from the electro-optical modulator (211) and the output optical signal from the slave laser (224).

3. The device of claim 2, wherein the output optical signal produced by the slave laser (224) has higher power and lower noise than the filtered optical signal received from the fixed optical bandpass filter (223).

4. The device according to claim 2 or 3, wherein the slave laser (224) is a distributed feedback laser.

5. The device according to any preceding claim, wherein:
• the tunable single-wavelength laser (201) is connected to the input ends of the first and second optical waveguide arms (210,220) through a first optical power amplifier (202) and an optical splitter (203);
• the electro-optical modulator (211) is designed to modulate, by means of the incoming radio frequency signal, the single-wavelength optical signal supplied by the tunable single-wavelength laser (201), amplified by the first optical power amplifier (202), and received through said optical splitter (203); and
• the coherent optical comb generator (221) is designed to generate the optical wavelength comb on the basis of the single-wavelength optical signal supplied by the tunable single-wavelength laser (201), amplified by the first optical power amplifier (202), and received through said optical splitter (203).

6. The device according to any preceding claim, wherein the fixed optical bandpass filter (223) is:
• connected to the coherent optical comb generator (221) through a second optical power amplifier (222); and
• designed to filter the optical wavelength comb generated by said coherent optical comb generator (221) and amplified by said second optical power amplifier (222).

7. The device according to any preceding claim, wherein the fixed optical bandpass filter (223) is designed to filter the optical wavelength comb so as to select one wavelength to be used by the photodetection means (231,232) to convert the optical in-phase and quadrature components into the corresponding baseband electrical analog in-phase and quadrature components.

8. The device according to any preceding claim, wherein:
• the optical hybrid coupler (204) is a 90-degree optical hybrid coupler, that is designed to
- combine the optical signals received from the first and second optical waveguide arms (210,220) into a corresponding combined optical signal, and
- output the optical in-phase and quadrature components of said combined optical signal; and
• the photodetection means comprise
- a first balanced photodetector (231) configured to perform a coherent balanced detection based on the optical in-phase component, thereby converting the latter into the corresponding baseband electrical analog in-phase component, and
- a second balanced photodetector (232) configured to perform a coherent balanced detection based on the optical quadrature component, thereby converting the latter into the corresponding baseband electrical analog quadrature component.

9. The device according to any preceding claim, wherein the electro-optical modulator (211) is designed to be connected, through an anti-aliasing filter, to an antenna to receive the incoming radio frequency signal.

10. The device according to any preceding claim, wherein the electro-optical modulator (211) is a Mach-Zehnder modulator.

11. Receiver (200) comprising the photonic-assisted radio frequency spectrum scanning device claimed in any preceding claim.

12. The receiver of claim 11, further comprising:
• analog-to-digital conversion means (261,262) configured to convert the baseband electrical analog in-phase and quadrature components into corresponding baseband digital in-phase and quadrature components; and
• processing means (270), that are connected to the analog-to-digital conversion means (261,262) to receive the baseband digital in-phase and quadrature components, and configured to process the latter.

13. The receiver of claim 12, wherein the analog-to-digital conversion means (261,262) are connected to the photodetection means (231,232) through amplification means (241,242) and filtering means (251,252).

14. Electronic warfare system comprising the receiver claimed in any claim 11-13.

15. Radar system comprising the receiver claimed in any claim 11-13.

## Patentansprüche

1. Photonengestützte Hochfrequenz-Spektrumsabtastvorrichtung, umfassend:
° einen ersten optischen Wellenleiterarm (210);
° einen zweiten optischen Wellenleiterarm (220);
° einen abstimmbaren Laser mit einer Wellenlänge (201), der
- mit Eingangsenden des ersten und des zweiten optischen Wellenleiterarms (210, 220) verbunden ist und
- betrieben werden kann, um an den ersten und den zweiten optischen Wellenleiterarm (210, 220) ein optisches Signal mit einer Wellenlänge, das eine einzige, abstimmbare Wellenlänge aufweist, zu liefern;
° einen optischen Hybridkoppler (204), der
- mit Ausgangsenden des ersten und des zweiten optischen Wellenleiterarms (210, 220) verbunden ist und
- ausgelegt ist, um optische Signale, die vom dem ersten und dem zweiten optischen Wellenleiterarm (210, 220) empfangen werden, zu kombinieren, um so entsprechende optische Komponenten in Phase und um 90° phasenverschoben zu erzeugen; und
° Photodetektionsmittel (231, 232), die
- mit dem optischen Hybridkoppler (204) verbunden sind, um die optischen Komponenten in Phase und um 90° phasenverschoben zu empfangen, und
- konfiguriert sind, um die optischen Komponenten in Phase und um 90° phasenverschoben in entsprechende elektrische analoge Basisbandkomponenten in Phase und um 90° phasenverschoben umzuwandeln;
wobei der erste optische Wellenleiterarm (210) einen elektrooptischen Modulator (211) umfasst, der ausgelegt ist, um:
° ein ankommendes Hochfrequenzsignal zu empfangen; und
∘ das optische Signal mit einer Wellenlänge mittels des ankommenden Hochfrequenzsignals zu modulieren, wodurch ein moduliertes optisches Signal hergestellt wird;
und wobei der zweite optische Wellenleiterarm (220) Folgendes umfasst:
∘ einen kohärenten optischen Kammgenerator (221), der ausgelegt ist, um einen optischen Wellenlängenkamm auf der Basis des optischen Signals mit einer Wellenlänge zu erzeugen; und
∘ einen festen optischen Bandpassfilter (223), der ausgelegt ist, um den optischen Wellenlängenkamm zu filtern, um so einen Abschnitt davon auszuwählen, wodurch ein gefiltertes optisches Signal erzeugt wird.

2. Vorrichtung nach Anspruch 1, wobei:
∘ der abstimmbare Laser mit einer Wellenlänge (201) so ausgelegt ist, dass er als ein Master-Laser arbeitet;
∘ der zweite optische Wellenleiterarm (220) ferner einen Slave-Laser (224) umfasst, dem das gefilterte optische Signal injiziert wird, um ein entsprechendes ausgegebenes optisches Signal herzustellen; und
∘ der optische Hybridkoppler (204) mit den Ausgangsenden des ersten und des zweiten optischen Wellenleiterarms (210, 220) verbunden ist, um das modulierte optische Signal von dem elektrooptischen Modulator (211) beziehungsweise das ausgegebene optische Signal von dem Slave-Laser (224) zu empfangen.

3. Vorrichtung nach Anspruch 2, wobei das ausgegebene optische Signal, das von dem Slave-Laser (224) hergestellt wird, eine höhere Leistung und ein geringeres Rauschen als das gefilterte optische Signal aufweist, das von dem festen optischen Bandpassfilter (223) empfangen wird.

4. Vorrichtung nach Anspruch 2 oder 3, wobei der Slave-Laser (224) ein Distributed Feedback Laser ist.

5. Vorrichtung nach einem der vorstehenden Ansprüche, wobei:
∘ der abstimmbare Laser mit einer Wellenlänge (201) mit den Eingangsenden des ersten und des zweiten optischen Wellenleiterarms (210, 220) durch einen ersten optischen Leistungsverstärker (202) und einen optischen Verteiler (203) verbunden ist;
∘ der elektrooptische Modulator (211) ausgelegt ist, um mittels des ankommenden Hochfrequenzsignals das optische Signal mit einer Wellenlänge, das von dem abstimmbaren Laser mit einer Wellenlänge (201) bereitgestellt wird, von dem ersten optischen Leistungsverstärker (202) verstärkt wird und durch den optischen Verteiler (203) empfangen wird, zu modulieren; und
∘ der kohärente optische Kammgenerator (221) ausgelegt ist, um den optischen Wellenlängenkamm auf der Basis des optischen Signals mit einer Wellenlänge, das von dem abstimmbaren Laser mit einer Wellenlänge (201) bereitgestellt wird, von dem ersten optischen Leistungsverstärker (202) verstärkt wird und durch den optischen Verteiler (203) empfangen wird, zu erzeugen.

6. Vorrichtung nach einem der vorstehenden Ansprüche, wobei der feste optische Bandpassfilter (223):
∘ mit dem kohärenten optischen Kammgenerator (221) durch einen zweiten optischen Leistungsverstärker (222) verbunden ist; und
∘ ausgelegt ist, um den optischen Wellenlängenkamm, der von dem kohärenten optischen Kammgenerator (221) erzeugt wird und von dem zweiten optischen Leistungsverstärker (222) verstärkt wird, zu filtern.

7. Vorrichtung nach einem der vorstehenden Ansprüche, wobei der feste optische Bandpassfilter (223) ausgelegt ist, um den optischen Wellenlängenkamm so zu filtern, um eine Wellenlänge auszuwählen, die von den Photodetektionsmitteln (231, 232) zu verwenden ist, um die optischen Komponenten in Phase und um 90° phasenverschoben in entsprechende elektrische analoge Basisbandkomponenten in Phase und um 90° phasenverschoben umzuwandeln.

8. Vorrichtung nach einem der vorstehenden Ansprüche, wobei:
∘ der optische Hybridkoppler (204) ein optischer 90-Grad-Hybridkoppler ist, der ausgelegt ist, um
- die optischen Signale, die von dem ersten und dem zweiten optischen Wellenleiterarm (210, 220) empfangen werden, zu einem entsprechenden kombinierten optischen Signal zu kombinieren und
- die optischen Komponenten in Phase und um 90° phasenverschoben des kombinierten optischen Signals auszugeben; und
∘ die Photodetektionsmittel Folgendes umfassen:
- einen ersten symmetrischen Photodetektor (231), der konfiguriert ist, um eine kohärente symmetrische Detektion basierend auf der optischen Komponente in Phase durchzuführen, wodurch Letztere in die entsprechende elektrische analoge Basisbandkomponente in Phase umgewandelt wird, und
- einen zweiten symmetrischen Photodetektor (232), der konfiguriert ist, um eine kohärente symmetrische Detektion basierend auf der optischen Komponente um 90° phasenverschoben durchzuführen, wodurch Letztere in die entsprechende elektrische analoge Basisbandkomponente um 90° phasenverschoben umgewandelt wird.

9. Vorrichtung nach einem der vorstehenden Ansprüche, wobei der elektrooptische Modulator (211) ausgelegt ist, um durch einen Anti-Aliasing-Filter mit einer Antenne verbunden zu werden, um das ankommende Hochfrequenzsignal zu empfangen.

10. Vorrichtung nach einem der vorstehenden Ansprüche, wobei der elektrooptische Modulator (211) ein Mach-Zehnder-Modulator ist.

11. Empfänger (200), umfassend die photonengestützte Hochfrequenz-Spektrumsabtastvorrichtung nach einem der vorstehenden Ansprüche.

12. Empfänger nach Anspruch 11, ferner umfassend:
∘ Analog-Digital-Wandlungseinrichtungen (261, 262), die konfiguriert sind, um die elektrischen analogen Basisbandkomponenten in Phase und um 90° phasenverschoben in entsprechende digitale Basisbandkomponenten in Phase und um 90° phasenverschoben umzuwandeln; und
∘ Verarbeitungsmittel (270), die mit den Analog-Digital-Wandlungseinrichtungen (261, 262) verbunden sind, um die digitalen Basisbandkomponenten in Phase und um 90° phasenverschoben zu empfangen, und konfiguriert sind, um die Letzteren zu verarbeiten.

13. Empfänger nach Anspruch 12, wobei die Analog-Digital-Wandlungseinrichtungen (261, 262) mit den Photodetektionsmitteln (231, 232) durch Verstärkungsmittel (241, 242) und Filtermittel (251, 252) verbunden sind.

14. System zur elektronischen Kampfführung, umfassend den Empfänger nach einem der Ansprüche 11-13.

15. Radarsystem, umfassend den Empfänger nach einem der Ansprüche 11-13.

## Revendications

1. Dispositif de balayage spectral radiofréquence assisté par photons comprenant :
• un premier bras de guide d'ondes optique (210) ;
• un second bras de guide d'ondes optique (220) ;
• un laser accordable à longueur d'onde unique (201), qui
- est raccordé à des extrémités d'entrée des premier et second bras de guide d'ondes optique (210, 220), et
- peut être mis en oeuvre pour fournir auxdits premier et second bras de guide d'ondes optique (210, 220) un signal optique à longueur d'onde unique ayant une seule longueur d'onde accordable ;
• un coupleur optique hybride (204), qui
- est raccordé à des extrémités de sortie des premier et second bras de guide d'ondes optique (210, 220) et
- est conçu pour combiner des signaux optiques reçus en provenance desdits premier et second bras de guide d'ondes optique (210, 220) de sorte à produire des composantes optiques en phase et en quadrature correspondantes ; et
• des moyens de photodétection (231, 232), qui
- sont raccordés au coupleur optique hybride (204) pour recevoir les composantes optiques en phase et en quadrature, et
- sont configurés pour convertir lesdites composantes optiques en phase et en quadrature en composantes analogiques électriques en phase et en quadrature en bande de base correspondantes ;
dans lequel le premier bras de guide d'ondes optique (210) comprend un modulateur électro-optique (211), qui est conçu :
• pour recevoir un signal radiofréquence entrant ;
et
• pour moduler le signal optique à longueur d'onde unique au moyen du signal radiofréquence entrant, ce qui permet de produire un signal optique modulé ;
et dans lequel le second bras de guide d'ondes optique (220) comprend :
• un générateur de peigne optique cohérent (221), qui est conçu pour générer un peigne de longueur d'onde optique sur la base du signal optique à longueur d'onde unique ; et
• un filtre passe-bande optique fixe (223), qui est conçu pour filtrer le peigne de longueur d'onde optique de sorte à sélectionner une partie de ce dernier, ce qui permet de produire un signal optique filtré.

2. Dispositif selon la revendication 1, dans lequel :
• le laser accordable à longueur d'onde unique (201) est conçu pour fonctionner en tant que laser maître ;
• le second bras de guide d'ondes optique (220) comprend en outre un laser esclave (224), qui est injecté avec le signal optique filtré pour produire un signal optique de sortie correspondant ; et
• le coupleur optique hybride (204) est raccordé aux extrémités de sortie des premier et second bras de guide d'ondes optique (210, 220) pour recevoir, respectivement, le signal optique modulé en provenance du modulateur électro-optique (211) et le signal optique de sortie en provenance du laser esclave (224).

3. Dispositif selon la revendication 2, dans lequel le signal optique de sortie produit par le laser esclave (224) présente une puissance plus élevée et un bruit plus faible que le signal optique filtré reçu du filtre passe-bande optique fixe (223).

4. Dispositif selon la revendication 2 ou 3, dans lequel le laser esclave (224) est un laser à rétroaction distribuée.

5. Dispositif selon l'une quelconque des revendications précédentes, dans lequel :
• le laser accordable à longueur d'onde unique (201) est raccordé aux extrémités d'entrée des premier et second bras de guide d'ondes optique (210, 220) par le biais d'un premier amplificateur de puissance optique (202) et d'un diviseur optique (203) ;
• le modulateur électro-optique (211) est conçu pour moduler, au moyen du signal radiofréquence entrant, le signal optique à longueur d'onde unique fourni par le laser accordable à longueur d'onde unique (201), amplifié par le premier amplificateur de puissance optique (202) et reçu par le biais dudit diviseur optique (203) ; et
• le générateur de peigne optique cohérent (221) est conçu pour générer le peigne de longueur d'onde optique sur la base du signal optique à longueur d'onde unique fourni par le laser accordable à longueur d'onde unique (201), amplifié par le premier amplificateur de puissance optique (202) et reçu par le biais dudit diviseur optique (203).

6. Dispositif selon l'une quelconque des revendications précédentes, dans lequel le filtre passe-bande optique fixe (223) :
• est raccordé au générateur de peigne optique cohérent (221) par le biais d'un second amplificateur de puissance optique (222) ; et
• est conçu pour filtrer le peigne de longueur d'onde optique généré par ledit générateur de peigne optique cohérent (221) et amplifié par ledit second amplificateur de puissance optique (222).

7. Dispositif selon l'une quelconque des revendications précédentes, dans lequel le filtre passe-bande optique fixe (223) est conçu pour filtrer le peigne de longueur d'onde optique de sorte à sélectionner une longueur d'onde qui doit être utilisée par les moyens de photodétection (231, 232) pour convertir les composantes optiques en phase et en quadrature en composantes analogiques électriques en phase et en quadrature en bande de base correspondantes.

8. Dispositif selon l'une quelconque des revendications précédentes, dans lequel :
• le coupleur optique hybride (204) est un coupleur optique hybride à 90 degrés qui est conçu
- pour combiner les signaux optiques reçus des premier et second bras de guide d'ondes optique (210, 220) en un signal optique combiné correspondant, et
- pour transmettre les composantes optiques en phase et en quadrature dudit signal optique combiné ; et
• les moyens de photodétection comprennent
- un premier photodétecteur équilibré (231) configuré pour effectuer une détection équilibrée cohérente en se basant sur la composante optique en phase, ce qui permet de convertir cette dernière en composante analogique électrique en phase en bande de base correspondante, et
- un second photodétecteur équilibré (232) configuré pour effectuer une détection équilibrée cohérente en se basant sur la composante optique en quadrature, ce qui permet de convertir cette dernière en composante analogique électrique en quadrature en bande de base correspondante.

9. Dispositif selon l'une quelconque des revendications précédentes, dans lequel le modulateur électro-optique (211) est conçu pour être raccordé, par le biais d'un filtre anti-repliement, à une antenne pour recevoir le signal radiofréquence entrant.

10. Dispositif selon l'une quelconque des revendications précédentes, dans lequel le modulateur électro-optique (211) est un modulateur de Mach-Zehnder.

11. Récepteur (200) comprenant le dispositif de balayage spectral radiofréquence assisté par photons selon l'une quelconque des revendications précédentes.

12. Récepteur selon la revendication 11, comprenant en outre :
• des moyens de conversion analogique-numérique (261, 262) configurés pour convertir les composantes analogiques électriques en phase et en quadrature en bande de base en composantes numériques en phase et en quadrature en bande de base correspondantes ; et
• des moyens de traitements (270) qui sont raccordés aux moyens de conversion analogique-numérique (261, 262) pour recevoir les composantes numériques en phase et en quadrature en bande de base et configurés pour traiter ces dernières.

13. Récepteur selon la revendication 12, dans lequel les moyens de conversion analogique-numérique (261, 262) sont raccordés aux moyens de photodétection (231, 232) par le biais de moyens d'amplification (241, 242) et de moyens de filtrage (251, 252).

14. Système de guerre électronique comprenant le récepteur selon l'une quelconque des revendications 11 à 13.

15. Système radar comprenant le récepteur selon l'une quelconque des revendications 11 à 13.
